# DEMANDE DE BREVET EUROPEEN

(11) **EP 1 739 561 A1**
(43) Date de publication de la demande: **03.01.2007**
(21) Numéro de dépôt: 06291069.0
(22) Date de dépôt: 28.06.2006
(51) Int. Cl.: G06F 12/08

(54) **Cohérence de cache dans un système multiprocesseurs à mémoire partagée**

(30) Priorité: 29.06.2005 FR 0506657
(71) Demandeur: STMicroelectronics SA, 92120 Montrouge (FR)
(72) Inventeur: Cousin, Jean-Philippe, 38100 Grenoble (FR); Berenguer, Jean-José, 38000 Grenoble (FR); Plessier, Gilles, 38180 Seyssins (FR)
(74) Mandataire: Gendron, Vincent Christian

(57) **Abrégé**

L'invention propose un procédé mettant en cohérence la mémoire cache (22) d'un processeur (2), dans lequel:
-le processeur traite (E1a, E1b) une requête d'écriture de données à une adresse de sa mémoire marquée à l'état partagé;
-ladite adresse est transmise (E3) à d'autres processeurs, les données sont écrites (E2a) dans sa mémoire cache (22) et l'adresse passe à l'état modifié, une mémoire annexe (29) mémorise ladite adresse, lesdites données et un marqueur associé (inv) dans un premier état;
-le processeur reçoit (E4) ladite adresse et un indicateur ;
-si l'indicateur indique que le processeur doit effectuer l'opération et si le marqueur associé est dans le premier état, lesdites données sont maintenues à l'état modifié;
-si l'indicateur n'indique pas que le processeur doit effectuer l'opération et si le processeur reçoit une commande de marquage à l'état invalide, le marqueur passe dans un second état.

## Description

L'invention concerne de façon générale la conception des systèmes numériques, et en particulier les appareils à processeurs multiples partageant une mémoire.

Un certain nombre de systèmes numériques comprennent plusieurs processeurs pour fournir des performances accrues, notamment pour pallier aux limites de fréquence d'un unique processeur, en particulier pour les systèmes sur puce (system on chip en langue anglaise). Chaque processeur d'un tel système peut synchroniser son fonctionnement avec les autres et peut partager des données par l'intermédiaire d'opérations de lecture/écriture dans des emplacements mémoire partagés par tous les processeurs. Pour fournir des accès aux données avec des temps de réponse réduits et avec une grande bande passante, chaque processeur dispose d'une mémoire cache contenant une copie locale de données d'un emplacement mémoire partagé. Comme les différents processeurs peuvent contenir des copies en doublon d'un même emplacement mémoire dans leur mémoire cache, il est nécessaire de conserver une cohérence entre ces mémoires cache. Cette cohérence est assurée au niveau matériel et permet d'optimiser l'échange des données en réduisant le coût de synchronisation. Ainsi, lorsqu'une donnée dans une mémoire cache est modifiée par un processeur, les mémoires cache des autres processeurs sont automatiquement mises à jour pour refléter précisément ce changement.

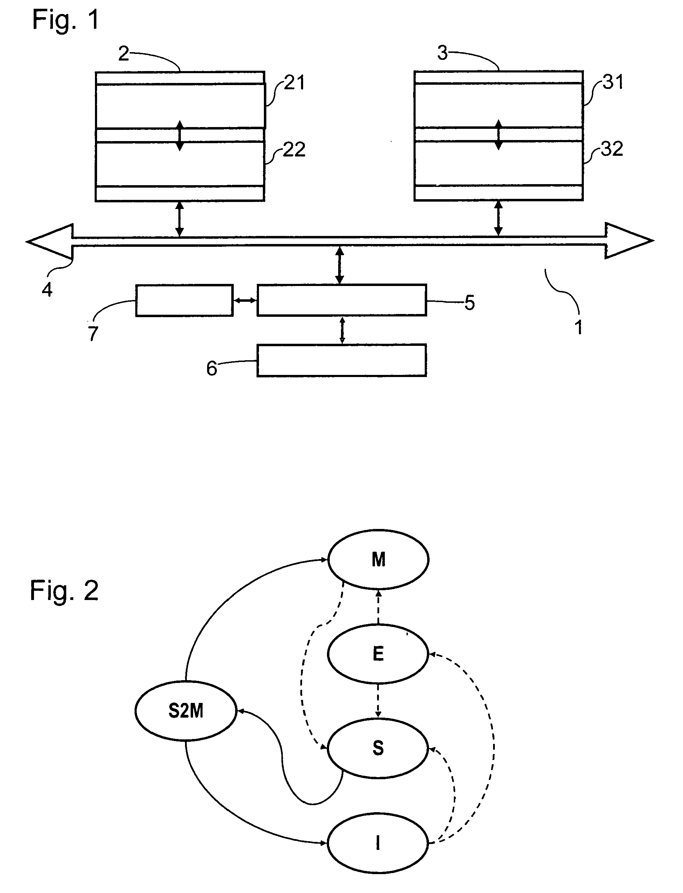

La figure 1 illustre un procédé de surveillance de trafic (snooping method en anglais) sur un bus global connectant les mémoires cache des processeurs à une mémoire partagée par l'intermédiaire d'une puce de pont (bridge chip en anglais). Le système numérique 1 de la figure 1 présente des processeurs 2 et 3 munis respectivement des unité de traitement 21 et 31 et des mémoires cache 22 et 32. Le système 1 présente également un bus 4 destiné à faciliter les opérations de mise en cohérence des mémoires caches 22 et 32. Le bus 4 couple les processeurs 2 et 3 au pont 5, le pont 5 étant lui-même couplé à une mémoire partagée 6 et à un canal d'entrée/sortie 7. L'interface de chaque processeur avec le bus présente 120 bits, 64 bits étant réservés aux données et 56 bits étant réservés à une adresse et au code d'opération.

Le pont 5 comprend un contrôleur mémoire ainsi qu'un circuit logique pour réaliser des transactions de surveillance de trafic sur le bus 4. Les processeurs 2 et 3 et leurs mémoires cache 22 et 32 gèrent les transactions de surveillance de trafic mémoire sur le bus 4. Les processeurs 2 et 3 utilisent des données de surveillance de trafic pour maintenir le contenu de leur mémoire cache cohérent avec la mémoire cache des autres processeurs.

La surveillance de trafic s'effectue typiquement au moyen du protocole MESI. Pour rappel, des états selon le protocole MESI sont associés à des données dans la mémoire cache d'un processeur. Ces états ont les significations suivantes :
L'état M pour modifié signifie que la mémoire cache du processeur est seule détentrice d'une copie modifiée et valide des données: ni les mémoires cache des autres processeurs, ni la mémoire principale partagée ne disposent de cette copie modifiée des données.
L'état E pour exclusif signifie que la mémoire cache du processeur et la mémoire principale partagée sont détentrices d'une copie des données valides, mais que les mémoires cache des autres processeurs ne détiennent pas cette copie.
L'état S pour partagé signifie que les données dans la mémoire cache du processeur sont éventuellement détenues par la mémoire cache d'autres processeurs et que ces données sont également mémorisées dans la mémoire principale partagée.
L'état I pour invalide signifie que les données dans la mémoire cache du processeur ne sont pas valides.

Un tel système présente des inconvénients. Pour réaliser l'écriture de certaine données se trouvant préalablement à l'état S, plusieurs accès à la mémoire cache sont parfois nécessaires. Ces accès induisent une structure de microprocesseur complexe et une consommation de courant relativement élevée, ce qui est pénalisant pour une réalisation sous forme de système sur puce.

L'invention vise à résoudre un ou plusieurs de ces inconvénients. L'invention porte ainsi sur un procédé de mise en cohérence de la mémoire cache d'un processeur avec une mémoire partagée par d'autres processeurs munis de mémoires cache selon un protocole de gestion de cohérence de cache présentant au moins des états modifié, partagé et invalide des données de la mémoire cache, comprenant les étapes suivantes :
- le processeur traite une requête d'écriture de données à une adresse de sa mémoire cache marquée à l'état partagé;
- le processeur transmet ladite adresse à destination des autres processeurs, le processeur écrit les données à ladite adresse dans sa mémoire cache et marque cette adresse à l'état modifié, le processeur écrit ladite adresse, lesdites données et place un marqueur associé dans un premier état dans une mémoire annexe et ;
- ultérieurement, le processeur reçoit ladite adresse et un indicateur indiquant si le processeur doit effectuer une opération mémoire sur cette adresse ;
   - si l'indicateur indique que le processeur doit effectuer une opération mémoire :
      - si le marqueur associé auxdites données est dans le premier état, lesdites données sont maintenues à l'état modifié dans ladite mémoire cache ;
      - sinon, le processeur transmet une requête d'écriture desdites données dans la mémoire partagée et les marque à l'état invalide dans sa mémoire cache ;
   - si l'indicateur n'indique pas que le processeur doit effectuer l'opération mémoire et si le processeur reçoit une commande de marquage des données à l'état invalide, le processeur place ledit marqueur dans un second état.

Selon une variante, si l'indicateur indique que le processeur doit effectuer une opération mémoire et si le marqueur est dans un premier état, ladite adresse et lesdites données sont effacées de la mémoire annexe.

Selon encore une variante, si l'indicateur n'indique pas que le processeur doit effectuer l'opération mémoire et si le processeur reçoit une commande de marquage des données à l'état invalide, le processeur transmet une requête d'écriture desdites données dans la mémoire partagée.

Selon une autre variante, si l'indicateur indique que le processeur doit effectuer une opération mémoire et si ledit marqueur est dans le premier état, le processeur émet une requête d'invalidation de l'état de l'adresse des mémoires cache des autres processeurs.

L'invention traite également d'un processeur numérique, comprenant :
- une mémoire cache présentant une zone de mémorisation de données et une zone de mémorisation de l'état de cohérence de ces données incluant les états modifié, partagé, invalide ;
- une mémoire annexe présentant une zone de mémorisation de données, une zone de mémorisation de l'adresse des données et une zone de mémorisation d'un marqueur ;
- une unité de gestion d'opérations mémoire apte à :
   - traiter une requête d'écriture de données à une adresse de la mémoire cache marquée à l'état de cohérence partagé ;
   - transmettre ladite adresse à destination d'autres processeurs selon un protocole de surveillance de trafic, écrire les données à ladite adresse dans la mémoire cache et marquer cette adresse à l'état de cohérence modifié, écrire ladite adresse et lesdites données dans la mémoire annexe et placer le marqueur dans un premier état;
   - recevoir ladite adresse, un indicateur indiquant si le processeur doit effectuer une opération mémoire sur cette adresse, et une commande de marquage de données à l'état invalide ;
   - maintenir lesdites données à l'état modifié dans la mémoire cache si l'indicateur indique que le processeur doit effectuer une opération mémoire et si ledit marqueur est dans le premier état;
   - transmettre une requête d'écriture desdites données dans une mémoire partagée et les marquer à l'état invalide dans la mémoire cache si l'indicateur indique que le processeur doit effectuer une opération mémoire et si le marqueur est dans le second état;
   - placer le marqueur dans le second état si l'indicateur n'indique pas que le processeur doit effectuer l'opération mémoire et si le processeur a reçu une commande de marquage des données à l'état invalide.

L'invention traite encore d'un système comprenant plusieurs processeurs tels que décrits ci-dessus, une mémoire partagée par les processeurs et un dispositif de surveillance de trafic apte à :
- réceptionner des adresses et des codes d'opération mémoire associés émis par les processeurs selon un protocole de surveillance de trafic ;
- transmettre aux processeurs une adresse et un code d'opération mémoire associé et transmettre à un des processeurs une indication qu'il doit effectuer l'opération mémoire ;
- transmettre à des processeurs une commande de marquage de données à l'état invalide ;
- réceptionner des requêtes d'écriture des données dans la mémoire partagée et effectuer des transferts de données entre les mémoires cache des processeurs et la mémoire partagée.

Selon une variante, ce système est intégré sous forme de système sur puce.

D'autres caractéristiques et avantages de l'invention ressortiront clairement de la description qui en est faite ci-après, à titre indicatif et nullement limitatif, en référence aux dessins annexés, dans lesquels :
- la figure 1 illustre un système numérique selon l'art antérieur ;
- la figure 2 illustre schématiquement les changements d'état selon un perfectionnement du protocole MESI selon l'invention ;
- la figure 3 illustre un exemple de transferts effectués dans un processeur pour mettre en oeuvre l'invention.

La figure 2 illustre des changements d'état induits par un protocole MESI modifié selon l'invention. L'invention pourrait également s'appliquer avec un autre protocole présentant des états partagé, modifié et invalide des données en mémoire cache. Les flèches en traits discontinus correspondent à des changements d'état habituellement mis en oeuvre par le protocole MESI. Les flèches en trait plein correspondent à des changements d'état introduits par l'invention.

L'invention met en oeuvre un protocole de mise en cohérence de cache dans lequel une opération externe requise par un processeur est signalée à l'ensemble des processeurs : l'adresse des données sur lesquelles l'opération mémoire doit être effectuée et un indicateur du processeur devant effectuer cette opération sont transmis à l'ensemble des processeurs.

L'invention propose une optimisation de l'écriture à l'état S en introduisant un état intermédiaire virtuel S2M entre l'état partagé S et l'état modifié M. Lorsque le processeur traite une requête d'écriture de données à une adresse de sa mémoire cache marquée à l'état partagé S, ces données passent dans l'état virtuel intermédiaire S2M. Si les données restent à l'état S2M et que le processeur reçoit un indicateur lui précisant qu'il doit exécuter sa requête et ainsi réaliser l'opération mémoire sur ces données, ces données passent dans l'état M et les données correspondantes dans les autres processeurs passent à l'état invalide. Si les données restent à l'état S2M et que le processeur reçoit un indicateur lui précisant qu'un autre processeur exécute une requête concernant ces données et requiert une invalidation, ces données passent dans l'état I.

Lors du passage à l'état intermédiaire S2M, l'opération d'écriture est effectuée dans la mémoire cache du processeur comme si elle était validée : les données sont inscrites à ladite adresse et marquées à l'état M. Lors du passage à l'état intermédiaire S2M, une mémoire annexe mémorise l'adresse et les données et marque qu'une opération mémoire sur ces données a été requise par le processeur et est en attente d'exécution.

L'état intermédiaire S2M correspond ainsi à la combinaison des données mémorisées provisoirement à l'état M dans la mémoire cache et de ces données mémorisées dans la mémoire annexe avec un marqueur à un premier état, que l'on nommera état 'opération mémoire en attente d'exécution'. Pour les autres processeurs, ces données sont encore considérées comme se trouvant à l'état S dans ce processeur, jusqu'à ce que l'opération mémoire du processeur sur ces données ait été réalisée ou invalidée.

Comme cela sera détaillé par la suite, l'invention permet ainsi de réduire le nombre d'accès à la mémoire cache du processeur lors du traitement d'une requête d'écriture sur des données à l'état partagé S. L'étape d'écriture est alors transparente pour les autres processeurs.

Lors du traitement d'une requête d'écriture à une adresse de sa mémoire cache marquée à l'état partagé S, le processeur transmet l'adresse à destination des autres processeurs, réalise l'écriture des données à cette adresse dans sa mémoire cache et marque cette adresse à l'état modifié dans sa mémoire cache. Le processeur écrit cette adresse et les données dans une mémoire annexe et les marque à l'état 'opération mémoire en attente d'exécution'.

Selon un protocole de surveillance de trafic, le processeur reçoit ensuite de l'extérieur cette adresse et un indicateur indiquant si il doit réaliser une opération mémoire sur cette adresse. Si tel est le cas, le processeur vérifie l'état du marqueur dans la mémoire annexe. Si les données sont marquées à l'état 'opération mémoire en attente d'exécution', les données sont maintenues à l'état M dans la mémoire cache. L'adresse, les données et le marquage sont alors effacés dans la mémoire annexe.

Si les données sont marquées dans un second état que l'on nommera état 'opération mémoire invalidée' dans la mémoire annexe, ces données ont également été préalablement marquées à l'état I dans sa mémoire cache et une opération d'écriture des données dans la mémoire partagée est requise. La vérification de l'état des données est donc effectuée à partir de la mémoire annexe et non à partir de la mémoire cache. Un accès supplémentaire à la mémoire cache est ainsi évité.

Si l'indicateur indique qu'un autre processeur doit réaliser l'opération mémoire sur l'adresse et si le processeur reçoit une commande de marquage des données à l'état invalide, le processeur marque lesdites données à l'état 'opération mémoire invalidée' dans la mémoire annexe et à l'état I dans sa mémoire cache.

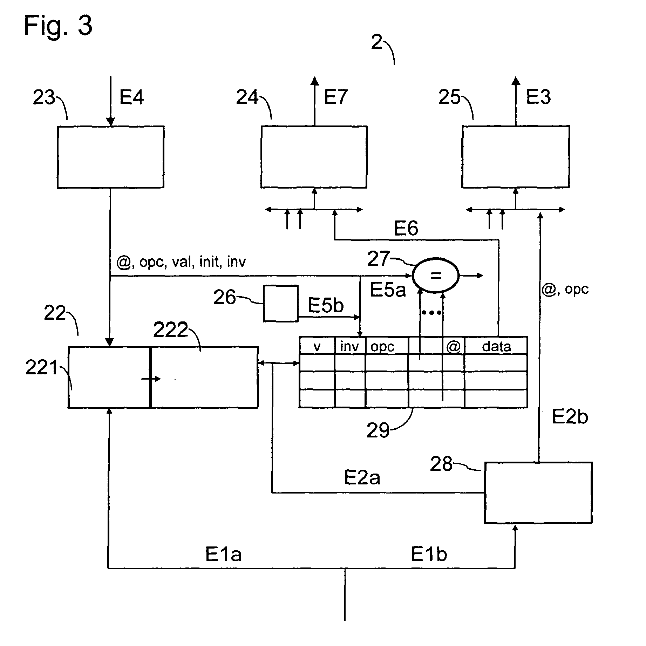

La figure 3 illustre différents traitements effectués par un mode de réalisation d'un processeur 2 mettant en oeuvre l'invention. Dans un premier temps, le processeur 2 traite une requête d'écriture de données à une adresse de sa mémoire cache. Lors de l'étape E1a, le processeur détermine si les données sont présentes dans la zone de mémorisation 222 d'après le tableau de marqueurs 221. Si les données sont présentes dans la zone 222, le processeur détermine leur état. En parallèle, le processeur place la requête d'écriture dans une file d'attente 28.

Le processeur 2, ayant déterminé à l'étape E1a que les données stockées à l'adresse indiquée dans la requête sont à l'état partagé, effectue les étapes E2a et E2b. Lors de l'étape E2a, le processeur 2 extrait les données et l'adresse de la file d'attente 28. Le processeur écrit ces données à cette adresse dans la zone 222 de la mémoire cache 22 et les marque comme modifiées. Lors de cette étape E2a, le processeur 2 écrit également les données et l'adresse et les marque à l'état 'opération mémoire en attente d'exécution' dans une table 29, utilisée comme mémoire annexe. La table 29 présente un champ d'identification *v*, un champ de marquage *inv*, un champ de code d'opération *opc,* un champ d'adresse @ et un champ de données *data.* Un marquage à l'état 'opération mémoire invalidée' correspond à une valeur de 1 du champ *inv*, un marquage à l'état 'opération mémoire en attente d'exécution' correspondant à une valeur 0 de ce champ.

Pour maintenir la cohérence des données des mémoires cache des processeurs, si la table 29 est pleine, le traitement de la requête d'écriture est interrompu jusqu'à ce que des emplacements mémoires soient libérés dans la table 29.

Lors de l'étape E2b, le processeur 2 prépare la transmission de l'adresse des données à destination des autres processeurs selon un protocole de surveillance de trafic. Le processeur arbitre cette transmission avec d'éventuelles autres transmissions liées à d'autres opérations mémoire traitées par le processeur 2. Lorsque le processeur 2 a décidé d'effectuer cette transmission, il transmet l'adresse des données et l'opération mémoire à effectuer à une FIFO de l'interface 25. Le processeur 2 effectue cette transmission vers les autres processeurs par l'intermédiaire de l'interface 25 lors de l'étape E3. Un dispositif de surveillance de trafic non illustré peut alors réceptionner la transmission du processeur 2 et effectuer un arbitrage avec toutes les transmissions fournies par les autres processeurs.

Lors de l'étape E4, le dispositif de surveillance de trafic décide de donner suite à la requête du processeur 2. Le dispositif de surveillance de trafic transmet alors à chaque processeur l'adresse des données devant subir une opération mémoire et indique au processeur 2 s'il doit effectuer l'opération mémoire. Cette adresse et cette indication sont mémorisées dans une mémoire tampon d'une interface d'entrée 23.

Si le processeur 2 doit effectuer l'opération mémoire, lors de l'étape 5b la table 26 renvoie à une entrée dans la table 29. On détermine alors par lecture de la table 29 l'opération mémoire concernée. On vérifie alors l'état du champ inv associé à cette opération mémoire.

Si le champ *inv* associé à cette adresse vaut 0 (état 'opération mémoire en attente d'exécution'), cela signifie qu'entre les étapes E3 et E4, aucune opération mémoire d'un autre processeur n'a invalidé l'opération mémoire requise sur les données. Les données associées à cette adresse sont alors effacées de la table 29. Les données et le marquage de leur état sont alors maintenus inchangés dans la mémoire cache 22. En parallèle, le dispositif de surveillance de trafic a transmis l'adresse aux autres processeurs en requérant que les données correspondantes soient placées à l'état I.

Si le champ inv associé à cette adresse vaut 1 (état 'opération mémoire invalidée'), cela signifie qu'entre les étapes E3 et E4, un autre processeur a effectué une opération mémoire sur les données et que cet autre processeur a transmis une commande d'invalidation des données au processeur 2. Une opération d'écriture mémoire externe est alors exécutée lors de l'étape E6. Les données, l'adresse et le code d'opération correspondants sont transférés de la table 29 vers une FIFO d'une interface de sortie 25, puis effacés de la table 29. Lors de l'étape E7, les données, l'adresse et le code d'opération sont transférés de la FIFO vers le dispositif de surveillance de trafic, qui gère la mémorisation de ces données dans la mémoire partagée. Lorsque le dispositif de surveillance de trafic a exécuté l'opération d'écriture des données, il envoie un message au processeur 2 pour confirmer cette exécution.

Si le processeur 2 ne doit pas effectuer l'opération mémoire sur les données et s'il reçoit une commande d'invalidation à l'étape E4, il effectue l'étape 5a. On détermine que l'adresse associée à l'opération mémoire est mémorisée dans la table 29 grâce au circuit 27. Le champ *inv* associé aux données de cette adresse est placé à 1, ce qui correspond à l'état 'opération mémoire invalidée'.

Avantageusement, on peut prévoir que le processeur supporte des instructions de type chargement lié (linked load en anglais) et écriture conditionnelle (conditional store en anglais). Le but de ces instructions est qu'une séquence liant une lecture et une écriture d'un processeur ne puisse être rompue par une écriture intermédiaire d'un autre processeur sur ces données. Le processeur 2 présente pour cela un registre de branchement et un registre de verrouillage d'adresse mémorisant l'adresse physique et un bit de verrouillage.

L'exécution d'une instruction de chargement lié se déroule de la façon suivante : l'adresse physique et le bit de verrouillage sont inscrits dans le registre de verrouillage du processeur. Quel que soit le contenu du registre de verrouillage, l'exécution du chargement lié met à jour l'adresse et met à 1 le bit de verrouillage dans le registre de verrouillage. Afin de garantir la cohérence de cache, le bit de verrouillage ne peut pas être mis à 1 par un accès direct.

L'exécution d'une instruction d'écriture conditionnelle se déroule de la façon suivante : le verrouillage du bit de verrouillage est vérifié. Si le bit de verrouillage est à 0, le bit associé du registre de branchement passe à 0. On pourrait également envisager de vérifier l'adresse dans le registre de verrouillage.

Lorsque le processeur reçoit l'adresse et l'indication qu'il doit effectuer l'opération mémoire sur cette adresse, si le bit de verrouillage correspondant est à 0 et que le marqueur de la mémoire annexe est à 1, l'opération d'écriture est annulée et la ligne de cache est invalidée.

L'opération d'écriture n'est effectuée que si le bit de verrouillage correspondant a la valeur 1. Bien entendu, si les données devant subir l'écriture sont à l'état E ou M dans la mémoire cache, l'opération d'écriture peut être réalisée directement dans cette mémoire cache, le protocole de cohérence de cache garantissant que cette écriture n'aura pas d'incidence sur ces données éventuellement mémorisées à l'état I dans d'autres processeurs.

Le bit de verrouillage est mis à 0 dans les cas suivants:
- lorsque le processeur qui exécute une instruction d'écriture conditionnelle met à 0 le bit de verrouillage et met à jour le registre de branchement associé ;
- lorsque le processeur effectue une écriture d'un 0 dans le bit de verrouillage ;
- lorsqu'une ligne de cache est retirée de la mémoire cache et correspond à l'adresse contenue dans le registre de verrouillage;
- un autre processeur ou un dispositif externe écrit à l'adresse qui est mémorisée dans le registre de verrouillage.

Pour des données à l'état S, le processeur transmet l'adresse des données au dispositif de surveillance de trafic lors de l'exécution des instructions liées. La décision de réaliser l'écriture se fait en fonction des informations reçues par le processeur 2 lors de l'étape E4.

L'utilisation de ces types d'instructions est transparente pour le dispositif de surveillance de trafic. Un chargement lié est en effet vu comme un chargement classique et une écriture conditionnelle est vue comme une écriture classique. Le dispositif de surveillance de trafic peut garantir la liaison entre ces opérations : si une requête de lecture/écriture de données à la même adresse par un processeur est arbitrée après un chargement lié d'un autre processeur, cette requête est bloquée dans le dispositif de surveillance de trafic tant que ce chargement lié n'est pas terminé.

Ce type d'instructions peut par exemple être mis en oeuvre pour réaliser plusieurs incréments d'une variable par plusieurs processeurs. Ce type d'instructions vise alors à éviter que deux processeurs ne lisent simultanément la même variable, puis effectuent chacun une écriture de la variable, l'incrément de la variable par un processeur n'étant alors pas pris en compte par l'autre processeur.

Un état peut être associé à chaque ligne ou à chaque page de données de la mémoire cache. La gestion par page des données de la mémoire cache ajoute une grande flexibilité en permettant de gérer des blocs de données de plus grande taille.

## Revendications

1. Procédé de mise en cohérence de la mémoire cache (22) d'un processeur (2) avec une mémoire partagée par d'autres processeurs munis de mémoires cache selon un protocole de gestion de cohérence de cache présentant au moins des états modifié, partagé et invalide des données de la mémoire cache, **caractérisé en ce qu'**il comprend les étapes suivantes :
- le processeur traite (E1a, E1b) une requête d'écriture de données à une adresse de sa mémoire cache marquée à l'état partagé;
- le processeur transmet (E3) ladite adresse à destination des autres processeurs, le processeur écrit (E2a) les données à ladite adresse dans sa mémoire cache (22) et marque cette adresse à l'état modifié, le processeur écrit ladite adresse, lesdites données et place un marqueur associé (inv) dans un premier état dans une mémoire annexe (29) et ;
- ultérieurement, le processeur reçoit (E4) ladite adresse et un indicateur indiquant si le processeur doit effectuer une opération mémoire sur cette adresse ;
- si l'indicateur indique que le processeur doit effectuer une opération mémoire :
- si le marqueur associé auxdites données est dans le premier état, lesdites données sont maintenues à l'état modifié dans ladite mémoire cache ;
- sinon, le processeur transmet une requête d'écriture desdites données dans la mémoire partagée et les marque à l'état invalide dans sa mémoire cache ;
- si l'indicateur n'indique pas que le processeur doit effectuer l'opération mémoire et si le processeur reçoit une commande de marquage des données à l'état invalide, le processeur place ledit marqueur dans un second état.

2. Procédé selon la revendication 1, dans lequel, si l'indicateur indique que le processeur doit effectuer une opération mémoire et si le marqueur est dans un premier état, ladite adresse et lesdites données sont effacées de la mémoire annexe.

3. Procédé selon la revendication 1 ou 2, dans lequel, si l'indicateur n'indique pas que le processeur doit effectuer l'opération mémoire et si le processeur reçoit une commande de marquage des données à l'état invalide, le processeur transmet (E6) une requête d'écriture desdites données dans la mémoire partagée.

4. Procédé selon l'une quelconque des revendications précédentes, dans lequel, si l'indicateur indique que le processeur doit effectuer une opération mémoire et si ledit marqueur est dans le premier état, le processeur émet une requête d'invalidation de l'état de l'adresse des mémoires cache des autres processeurs.

5. Processeur numérique (2), **caractérisé en ce qu'**il comprend :
- une mémoire cache (2)présentant une zone de mémorisation de données (221) et une zone de mémorisation (222) de l'état de cohérence de ces données incluant les états modifié, partagé, invalide ;
- une mémoire annexe (29) présentant une zone de mémorisation de données (data), une zone de mémorisation de l'adresse des données (@) et une zone de mémorisation d'un marqueur (inv) ;
- une unité de gestion d'opérations mémoire apte à :
- traiter une requête d'écriture de données à une adresse de la mémoire cache marquée à l'état de cohérence partagé ;
- transmettre ladite adresse à destination d'autres processeurs selon un protocole de surveillance de trafic, écrire les données à ladite adresse dans la mémoire cache et marquer cette adresse à l'état de cohérence modifié, écrire ladite adresse et lesdites données dans la mémoire annexe et placer le marqueur dans un premier état;
- recevoir ladite adresse, un indicateur indiquant si le processeur doit effectuer une opération mémoire sur cette adresse, et une commande de marquage de données à l'état invalide ;
- maintenir lesdites données à l'état modifié dans la mémoire cache si l'indicateur indique que le processeur doit effectuer une opération mémoire et si ledit marqueur est dans le premier état;
- transmettre une requête d'écriture desdites données dans une mémoire partagée et les marquer à l'état invalide dans la mémoire cache si l'indicateur indique que le processeur doit effectuer une opération mémoire et si le marqueur est dans le second état;
- placer le marqueur dans le second état si l'indicateur n'indique pas que le processeur doit effectuer l'opération mémoire et si le processeur a reçu une commande de marquage des données à l'état invalide.

6. Système **caractérisé en ce qu'**il comprend plusieurs processeurs selon la revendication 5, une mémoire partagée par les processeurs et un dispositif de surveillance de trafic apte à :
- réceptionner des adresses et des codes d'opération mémoire associés émis par les processeurs selon un protocole de surveillance de trafic ;
- transmettre aux processeurs une adresse et un code d'opération mémoire associé et transmettre à un des processeurs une indication qu'il doit effectuer l'opération mémoire ;
- transmettre à des processeurs une commande de marquage de données à l'état invalide ;
- réceptionner des requêtes d'écriture des données dans la mémoire partagée et effectuer des transferts de données entre les mémoires cache des processeurs et la mémoire partagée.

7. Système selon la revendication 6 intégré sous forme de système sur puce.
